# EUROPEAN PATENT APPLICATION

(11) **EP 2 034 694 A1**
(43) Date of publication of application: **11.03.2009**
(21) Application number: 07017381.0
(22) Date of filing: 05.09.2007
(51) Int. Cl.: H04L 29/08

(54) **Telecommunication applications**

(71) Applicant: Nokia Siemens Networks Oy, 02610 Espoo (FI)
(72) Inventor: Lee, Wye Joe, Bandar Kinrara 47100 Buchong (MY); Siew, Edward, Taman Seri Gombak 68100 Batu Caves (MY)
(74) Representative: Fischer, Michael

(57) **Abstract**

In order to provide a method and a system for making the implementation and development of IP-based telecommunication services more easy, executable code is transmitted from a server system (430) to a client system (410). The client system (410) comprises a web browser (411). The executable code in the client system (410) is called up by the web browser (411). The executable code itself calls up a subroutine that is encapsulated within a telecommunication services library (499), whereas the subroutine accomplishes at least a subtask of the telecommunication service.

## Description

The present invention relates to the field of development of telecommunication applications.

An IP-based telecommunication application (for example text messaging, voice call, video call) typically needs to perform some form of data communication on an IP network. Such an application needs to be able to exchange signaling data with one or more network nodes, and the data must be formatted in accordance to a specific telecommunication-related protocol which can be understood by the parties involved in the telecommunication session. These telecommunication-specific requirements add additional complexity to the development of the application. Therefore, it is desirable to reduce the complexity for developing such an application.

Traditionally, telecommunication applications are developed as desktop-based applications, also known generally as standalone applications. A desktop-based application needs to be installed on a client device before it could be executed. Therefore, desktop-based applications are sometimes referred to as thick-client applications.

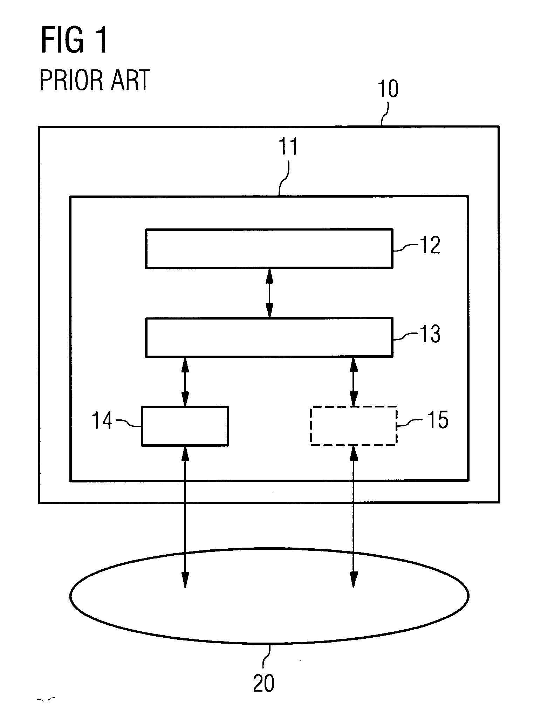

Figure 1 shows a typical client system 10 which is connected to an IP-network 20 according to the state of the art. The client system 10 has implemented the following layered components 12, 13, 14, 15 which are used for desktop-based telecommunication applications:
- A user interface 12 which is used by the user for interacting with the application and which is of graphical nature in most modern applications;
- An application logic 13 which contains components that control the entire application and which is architecturally located centrally in the overall software structure and acts as a mediator between upper layers (e.g. the user interface) and lower layers (e.g. protocol stacks and other layers);
- A communication stack 14 implementing the chosen telecommunication protocol used in the particular application (for example, SIP, MGCP, and etc.). The communication stack 14 is responsible for constructing and sending out protocol messages, as well as receiving and interpreting incoming protocol messages. The communication stack 14 interacts with the other telecommunication nodes and telecommunication equipment in the network;
- Depending on the application in question, there may be other stacks 15 necessary to be used in conjunction with the main communication stack 14. For example, in an application that supports voice calling, a RTP stack is commonly needed for sending and receiving voice streams across the IP network.

Despite the layered architecture, desktop-based applications require installation, which results in additional complexity for mass deployment. For example, the application may need to be deployed to users in a corporate intranet environment. In a controlled corporate intranet, all users may be using standardized hardware and software, minimizing the risk of software incompatibility problems. However, the number of users in the intranet may be high, and it can be a tedious process to deploy the application to every user.

The application may also be targeted for general users of the Internet. For this scenario, a typical application may need to be deployed to devices of various platforms and types, potentially causing software incompatibility problems. Additionally, nowadays, this does not only involve different operating systems since devices that run client applications are no longer restricted to personal computers, but also encompass other devices, for example PDAs, mobile phones and tablet PCs. Therefore developers often develop and maintain separate versions of the application that run on separate platforms and devices.

In addition to the problem of deploying a telecommunication application, there is the problem of updating the application after it has been deployed. From time to time, a new version of the application may be released. For reasons similar to the process of the initial deployment, ensuring that all user devices are updated with the new version of the application can be problematic.

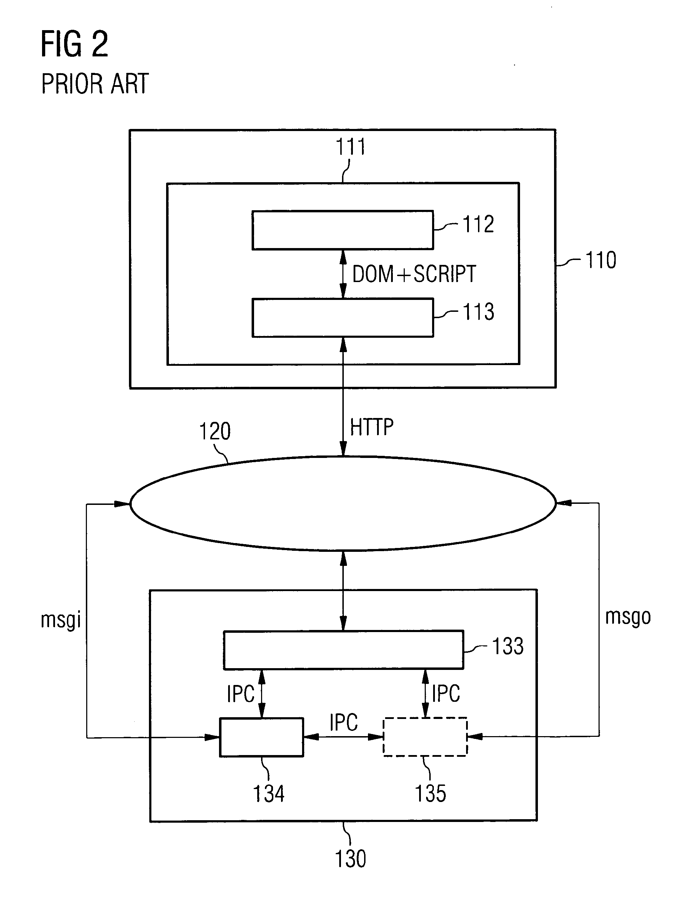

Figure 2 illustrates a web based layered telecommunication application according to the state of the art. Thereby a client 110 is connected via an internet protocol network 120 to a server 130 (e.g. a web and application server). The client 110 comprises a web browser 111. The layered service functions as follows:

A user interface 112 that is comprised by the browser 111 comprises from HTML code (or HTML variants such as XHTML and DHTML). CSS can be used in conjunction to further control the appearance of the user interface.

An application logic 113 acts as a controller at the client-side browser. The application logic 113 is implemented in at least one client-side scripting language such as Javascript. In the context of telecommunication applications, its primary task is to orchestrate the HTTP communication between the browser 111 and the server 130. The controller determines what parameters are to be included in HTTP requests, and when to send the HTTP requests. Also, the controller determines what actions are to be taken when a HTTP response arrives. Client-side scripts are limited in functionality and can only access client-side resources (e.g. obtaining the system time). For security reasons, certain potentially damaging operations such as reading from and writing to the local disk are not allowed to be performed by the client-side scripts.

The scripts also cannot directly access the server-side resources (e.g. databases).

A server side application logic 133 component acts as a controller at the server 130. It is implemented in server-side programming or scripting languages such as JSP, servlets, PHP, ASP and others. It decides what operations to perform upon receiving a HTTP request from the client 110, and what response to send back to the client system 110. Server-side scripting/programming languages have access to server-side resources such as a database, and can service client requests for information stored in the resources by extracting information from the server-side resources and embedding the information into the HTTP response that is sent back to the browser 111.

A communication stack 134 is comprised by the server 130. The communication stack 134 implements the chosen telecommunication protocol (for example SIP) used in the application. The telecommunication stack 134 is responsible for constructing and sending out protocol messages msgo, as well as receiving and interpreting incoming protocol messages msgi. In a web-based environment, telecommunication stack 134 is located at the server instead of being at the client. Therefore, the stack acts as a user agent by exchanging protocol data with other telecommunication nodes/equipments (e.g. SIP proxy) on behalf of the clients.

Depending on the application in question, there may be other stacks 135 used in conjunction with the communication stack 134.

In the following, a practical example on how the web-based model can be used for developing a web based application is given. Thereby a web-based instant messenger serves as the telecommunication application. The web based instant messenger shall support a common set of features:
- Receiving presence information of buddies in the buddy list.
- Sending own presence information to the server.
- Sending message to a designated buddy.
- Receiving a message from a buddy.

Two types of events can be categorized in this kind of application:
- Client-originated events, such as sending own presence information to the server or sending a message to a designated buddy.
- Server-originated events that need to be delivered to the client, such as receiving presence information of buddies or receiving a message from a buddy.

The client-originated events are initiated by a user by interacting with the user interface 112. For example, to send a message to a buddy, the user could type the message in a HTML textbox, and click on a 'Send' button.
For each client-originated event, a HTTP request is made from the browser 111 to the server 130. The HTTP request contains specific parameters. In the case of sending a message, the parameters may be the content of the message, and to whom the message is to be sent.

At the server side, upon receiving the HTTP requests (representing the client-originated events), the application logic layer takes appropriate action. For example, upon receiving a HTTP request to send a message to a buddy, the application layer may pass on the request to the communication stack 134. Interaction between the application layer 133 and the communication stack 134 is done using an inter-process communication (IPC) method relevant to the server technology being used. At the communication stack 134, a protocol-formatted message is sent out to the relevant node on the network. For example, if SIP is the messaging protocol being used, a SIP MESSAGE may be constructed on behalf of the user, containing the message that is to be sent to a buddy. Then, the communication stack sends out this SIP MESSAGE to a corresponding SIP proxy which handles the domain in which the addressed buddy resides.

Server-originated events need to be sent from the server to the client. For example, upon receiving a SIP MESSAGE from a buddy by the communication stack 134 , the communication stack 134 informs the application logic layer about the event. The server 130 now needs to deliver this message to the client browser 111. However, due to the nature of the web-based model, HTTP requests always originate from the browser 111 to the server 130, and there is no standard way for the server 130 to first initiate a request to the browser 11. In other words, the server can only 'answer when spoken to'. To overcome this problem, the application logic 113 in the browser 111 implements a timer, which periodically sends a HTTP request to the server in order to obtain the latest server-originated events. Such a technique is known as 'polling'. For example, a HTTP request is made every 20 seconds. In determining the duration of the polling timer, there is a tradeoff between the perceived real-timeliness of the application and the network bandwidth needed for the application. Shorter timers produce shorter polling cycles, providing better real-timeliness at the expense of generating more network traffic (and vice versa).

The application logic 133 layer in the server 130 may implement a buffer to temporarily collect and store all server-originated events that is yet to be delivered to the browser 111. When the browser 111 makes a HTTP request to the server 130, requesting for the latest server-originated events, the server can populate the HTTP response with representations of the collection of server-originated events. Upon sending the HTTP response, the server may then clear the temporary buffer to store fresh events.

At the client-side application logic 113, upon receiving the HTTP response, the contents of the response is checked, interpreted, and appropriate action is taken. For example, if a message was received by a buddy, the application logic layer updates the user interface 112 to display the newly received message (which is extracted from the HTTP response), The interaction between the application logic layer and the user interface layer is done using a combination of Document Object Model (DOM) and client-side script (such as Javascript),

Unlike desktop-based applications, web-based applications are not platform specific. At the client-side, there are no specific requirements on the underlying operating system or hardware being used, as long as the client device can run a web browser. Today, web browsers are available on all major operating systems running on a variety of devices such as personal computers, PDAs, mobile phones and tablet PCs. This eases up the deployment of the web application to many users that may be using a multitude of devices running different operating systems.

At the server-side, any server-side scripting or programming language could be used to implement the application logic, communication stack and other layers, with no dependency on the platform of the user's client device.

Unlike desktop-based applications, web-based applications do not need to be 'installed' in the traditional sense. Web-based applications are stored at the web server, and downloaded automatically by the client browsers as web pages, with no user intervention required. Therefore, web applications are actually only 'installed' in one place, which is at the web server, rather than being 'installed' at every client device. This solves the mass-deployment problem encountered in traditional desktop-based applications. Additionally, further updates to the web application can also be done by updating only the files in the web server. Whenever a user subsequently requests for the web application after the update is performed, the user can automatically with the updated application. However, there still remains the drawback, that the development of web based telecommunication applications needs to be implemented differently, depending on the server system used. Additionally also a web based telecommunication application needs to be adapted to different browser models that are to be served. Additionally, the server system needs to be polled in short intervals, which increases data traffic and which results in a decreased timeliness of the telecommunication service.

It is therefore an objective of the present invention to provide a method and a system for making the implementation and development of IP-based telecommunication services more easy. Another objective of the invention is to apply a telecommunication service for an underlying telecommunication network infrastructure on a digital end device without the need to install a standalone application. These objectives are achieved by the measures taken according to the independent claims. Advantageous embodiments are described in the dependent claims.

In order to solve the above mentioned objectives, an executable code is transmitted from a server system to a client system. The client system comprises a web browser. The web browser calls up the executable code. The executable code calls up a subroutine that is encapsulated within a telecommunication services library. The subroutine accomplishes at least a subtask of the telecommunication service.

According to a preferred embodiment the telecommunication services library is defined as any form of browser executable scripting and comprises at least a subset of the following sub-routines:
- a subroutine for voice processing;
- a subroutine for messaging;
- a subroutine for constructing protocol specific messages;
- a subroutine for sending the constructed protocol specific messages;
- a subroutine for receiving the protocol specific messages; and
- a subroutine for parsing the received protocol specific messages.
   This has the advantage of reducing development effort, implementation effort, and usability significantly.

According to another preferred embodiment the sub-routine accesses a telecommunication protocol stack in order to communicate with the server system. This results in a layered software and communication structure, which breaks a complex task into several more simple subtasks.

According to another preferred embodiment the telecommunication protocol stack is comprised by the client system, preferably by the web browser or by an operating system on the basis of which the web browser is executed. This way communication between client system and server system can be reduced. In addition, the telecommunication protocol stack can be adapted to the client system (e.g. operating system and/or web browser and/or hardware configuration of the client system).

According to another preferred embodiment, before the telecommunication protocol stack is accessed by the subroutine, the telecommunication protocol stack is transmitted from the server system to the client system. This results in the advantage that the stack used by the client can be adapted individually to the service and/or to the executable code.

According to another preferred embodiment the telecommunication protocol stack is comprised by the server system. The client system can therefore be hold very slim and simple, when accessing the telecommunication protocol stack on the server system.

According to another preferred embodiment the telecommunication services library is comprised by the client system, preferably by the web browser or by an operating system on the basis of which the web browser is executed. This way the client system can directly access the telecommunication services library, without the need to access it through an external network.

According to another preferred embodiment the subroutine exposes an application programming interface (API) which is called up by the executable code. This results in the advantage, that a service developer does not need to have specific knowledge about the internal logic and structure of the subroutine. The executable code that accesses the subroutine or usually a plurality of subroutines can therefore be kept simple, well structured and applicable on different platforms and operating systems.

Service development get even more easy when the subroutine and/or the whole library is not modified by the executable code.

According to another preferred embodiment that designed to keep the executable code simple, the subroutine is only modified by other subroutines within the library.

According to another preferred embodiment the subroutine is modified by the executable code. This solution rends the executable code more powerful, since more complex telecommunication services can be implemented.

According to another preferred embodiment the executable code is coded in a web-based Markup Language, 1 such as hypertext markup language (HTML), or extensible markup language (XML), extensible application markup Language (XAML), dynamic HTML (DHTML), and/or XTML. Cascading style sheets (CSS) can be used in conjunction to further control the appearance of the user interface.

According to another preferred embodiment the client system permanently comprises the telecommunication services library. This results in the advantage that the library does not need to be downloaded and/or implemented several times.

According to another preferred embodiment the library is downloaded with the executable code to the client system. This results in the advantage that the library and/or the subroutine can be adapted according to the telecommunication service.

In other words, depending on the embodiment, the invention can provide a number of advantages:
The invention can provide a new possibility for developing telecommunication applications for deployment in a web-based environment by embedding telecommunication services API directly into web pages and the possibility for web programmers to develop their own telecommunication application. These web programmers could be third-party developers that are not working for a telecommunication company and have little knowledge about telecommunication technologies and protocols in general. The third-party web programmers make use of the telecommunication services libraries and its API which may be provided by a telecommunication network operator. While the concept of telecommunication network operators providing API for external developers to develop applications that accesses resources located in the protected telecommunication network infrastructure is not new, the usage of browser client-side scripts to implement such an API is the novelty of this invention.

The invention can also allow the possibility to tap into the large pool of web programmers to develop telecommunication applications using browser client-side scripting languages, as opposed to traditionally non-web programmers developing in third-generation programming languages (such as C, C++, Java, and others). In turn, this may lead to more rapid development of new telecommunication applications.

In addition, when the scripts in the telecommunication services library are designed as an independent and generic software module, the library can be re-used for many different applications. For example, an instant messaging application and a voice call application may both use a common SIP library. Existing well-known telecommunication API can be ported to the browser client-side script. Examples of such API are the collection of JAIN API (JAIN Java Call Control, JAIN SIP, and others) and Parlay API. These allow the web programmers to work with existing API that are mature, well documented and tested.

The telecommunication services library may provide either a high-level or low-level API. A high-level API is an API that exposes functions that abstracts the underlying implementation to a great extend, providing developers with a simplified view of the telecommunication services. A low-level API exposes functions that provide more control over the underlying implementation, such as setting specific header values for a particular protocol message. As an example, a high-level instant messaging API allows developers to develop instant messaging application without regard to the actual underlying messaging protocol, while a low-level instant messaging API allows the developer to deal with the details of a specific messaging protocol (such as SIP or XMPP). Both high-level and low-level API serves specific needs, providing a tradeoff between simplicity and power.

Preferred embodiments of the invention are in the following described with reference to the attached drawings which depict in:
Figure 1 a typical client system 10 which is connected to an IP-network 20 according to the state of the art;
Figure 2 a web based layered telecommunication application according to the state of the art;
Figure 3 a software layer model of a client system comprising a web browser according to an embodiment of the invention;
Figure 4 an embodiment of a network system illustrating further embodiments of the invention;
Figure 5 an embodiment of a network system illustrating further embodiments of the invention; and
Figure 6 an embodiment of a network system illustrating further embodiments of the invention.

The invention builds upon the web-based model for developing telecommunication applications. According to an abstracted concept of the invention, a web browser comprises a new software layer. This layer consists of script libraries (written in client-side scripting language such as JavaScript) that provides an interface into the services provided by an underlying telecommunication network infrastructure. These services may include call control, conferencing, voice call, video call, presence, instant messaging, mailbox, address book, and others.

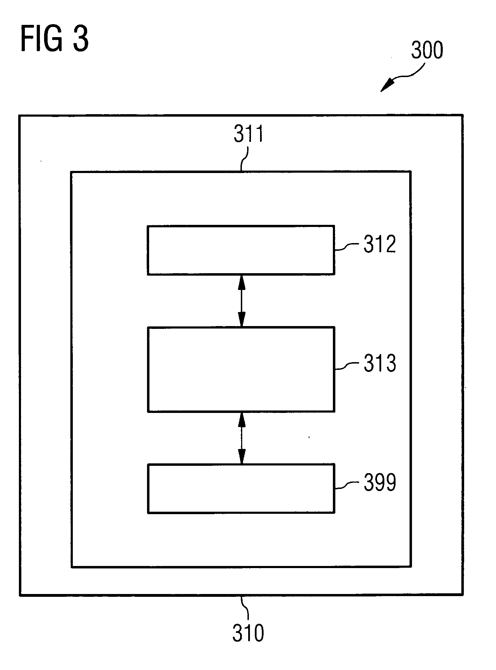

Figure 3 illustrates an embodiment of the invention including the new software layer in the form of a telecommunication services library 399 implemented in a client system 310. The client system 310 comprises a web browser 311. The web browser comprises a user interface 311, an application logic 312 and the telecommunication services library 399.

The telecommunication services library 399 exposes an application programming interface API as the interface for the upper layers (application logic and user interface) to use the library. The telecommunication services library 399 is designed to be an independent software layer. This means it is not coupled with any user interface code or application logic code of any particular application. Because interaction with the telecommunication services library 399 is restricted to only whatever operations that are exposed by the library's API, all internal components within the library cannot be accessed or modified directly by codes external to the library. Therefore, due to this high level approach, a change in the user interface code or application logic code will not produce an unexpected change of behavior in the telecommunication service library.

The internal workings of the telecommunication services library 399 are hidden from the developer who uses the telecommunication services library 399. For example, the application developer calls an API function provided by the telecommunication services library 399 to retrieve a list of contacts from a server-based centralized phonebook. The telecommunication services library 399 may immediately return such a list that was cached locally in the browser 311 due to a previous request to the server, or it may make a new HTTP request to the web server, which may in turn make a LDAP request to a Lightweight Directory Access Protocol (LDAP) database. The LDAP database responses with the list of contacts for the specified user, which in turn is formatted into a HTTP response by the web server, and delivered back to the browser 311 to the telecommunication services library 399. The telecommunication services library 399 then extracts the contents of the HTTP response and returns the list of contacts as an object (for example, as a JavaScript array) back to the original code that called the API function. It is then up to the original calling code to do something useful with the returned object, such as updating the user interface 312 with the newly obtained list of contacts. From the application developer's point of view, the developer does not need to know how the list of contacts was obtained by the telecommunication services library 399. The developer only needs to know that the telecommunication services library 399 returns the list of contacts in the form of a JavaScript array.

Functions that are exposed by the API can be differentiated into two types: blocking and non-blocking. Blocking functions are functions which block the execution of the calling code until the called function completes its task and return. Non-blocking functions are functions which return immediately after being called, allowing the calling code to proceed execution without waiting for the called function to complete its task.

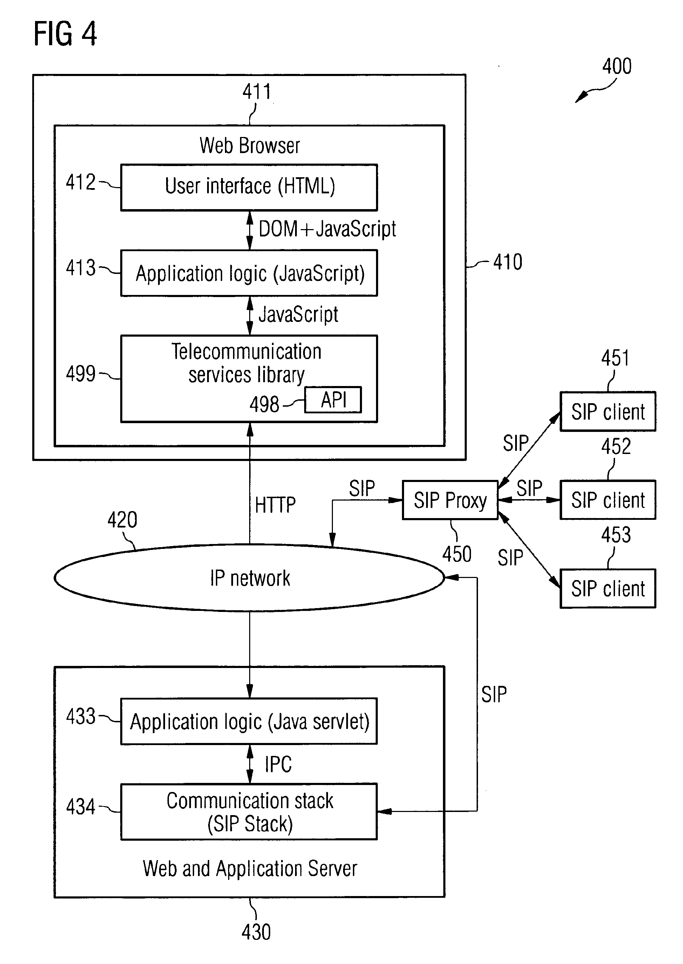

Figure 4 shows an embodiment of a network system describing a further embodiment of the invention, where an instant messaging application with two sample use cases is presented:
The first sample use case is the sending of a message to buddy named John, and the second sample use case is the receiving of a message from a buddy named John. The network system comprises an IP network 420 that is connected to a client system 410, a web server 430, and a SIP Proxy 450. The SIP proxy 450 is connected to SIP clients 451, 452, 453. client system 410 comprises a web browser 411. The web browser 411 comprises a user interface 412, an application logic 413, and a telecommunication services library 499. The web server comprises an application logic 433 and a communication stack 434.

The user interface 412 comprises HTML-code, providing a graphical interface with interface widgets such as text boxes, buttons, scroll bars, and others. The application logic 413 and the telecommunication services library 499 comprise or are written in JavaScript. The telecommunication services library 499 comprises an API 498 with a description that is high-level and may be published as following:
Class: ChatSession An instance of ChatSession represents a chat session with a single buddy.
Constructor: ChatSession(buddyID) Creates an instance of ChatSession, with buddyID being the ID of the buddy to chat with.
Methods: sendMessage(message) Sends a message to the chatting buddy.
Properties: buddyID Contains the ID of the chatting buddy.
Event handler registration: addMessageReceivedListener(listener) Register a callback function to handle incoming messages from the designated buddy. The callback function must accept a single parameter which contains the contents of the incoming message.

In order to start exchanging messages with John, the application logic code first instantiates a new ChatSession object, as done by the following code: var chatsessionjohn = new ChatSession("john"); chatsessionjohn.addMessageReceivedListener(updateGhatWindow);

In the code snippet above, a new ChatSession object is instantiated in order to start exchanging messages with John. In addition, a function named updateChatWindow is assigned to handle any incoming messages from John. The function updateChatWindow is written by the application developer (it is not part of the telecommunication services library) and will be responsible to update the HTML user interface to display newly received messages from John. When the user wants to send a message to John, the user will key in the message via the user interface (for example, keying the message into a textbox and clicking the "Send" button). The application logic code intercepts this event, and proceeds to request the telecommunication services library 499 to send the message. The message to be sent to John is represented by a variable outgoingMessage, and the following function is called:
chatsessionjohn.sendMessage(outgoingMessage);

Within the code of the telecommunication services library 499, the request to send a message to John is processed. A new HTTP request is prepared, containing necessary parameters to be sent to the web server 430, including the name of the buddy (John), John's SIP URI, and the message to be sent (for example, "How are you?"). The HTTP request is then sent to the web server 430.

At the web server 430, the HTTP request is received, and is handled by the application logic 433 of the server, which is implemented as a Java servlet. Based on the parameters contained in the HTTP request, the servlet constructs a SIP MESSAGE. The SIP MESSAGE contains header that identifies the SIP Uniform Resource Identifier (URI) of both the sender and the receiver of the message. The message "How are you?" is also contained inside the body of the SIP MESSAGE. Once completely constructed, the server communication stack 434 is used to send out the SIP MESSAGE via the IP network 420 to the SIP proxy 450 that handles the SIP-client 451 of John.

The SIP MESSAGE is received by the corresponding SIP proxy 450, and is forwarded to John's SIP user agent. John then reads the message, and proceeds to reply with the statement "I am fine, thank you". John's SIP user agent constructs the appropriate SIP MESSAGE, and sends it back to the SIP proxy 450. The SIP proxy 450 then forwards John's SIP Message back to the SIP stack 434 located in the web server 430. The application logic 433 servlet is notified of the newly received message from John, and stores the message in a temporary buffer.

At the client-side, the telecommunication services library 499 implements a polling mechanism to check if any messages are to be received by the user. The telecommunication services library 499 periodically sends out a HTTP request to the web server to retrieve new messages if available. The server 430 receives the polling HTTP request from the client system 410, retrieves the message stored in the temporary buffer, and generates a HTTP response that includes John's response message. John's response message could be formatted in the form of XML and embedded into the HTTP response's body.

The HTTP response is received at the browser 411 by the telecommunication services library 499. The content of the XML contained in the body of the HTTP response is parsed, and the message from John ("I am fine, thank you") is extracted. The telecommunication services library 499 then proceeds to call the previously registered callback function updateChatWindow, with the message from John provided as a parameter. The function updateChatWindow then updates the user interface 412 to display the new message that was received from John. For example, the function could be coded as the following:
function updateChatWindow(message) { var chatWindow = document. getElementById("textbox"); chatWindow.value = chatWindow.value + "\n" + chatsessionjohn.buddyID + ": " + message; }

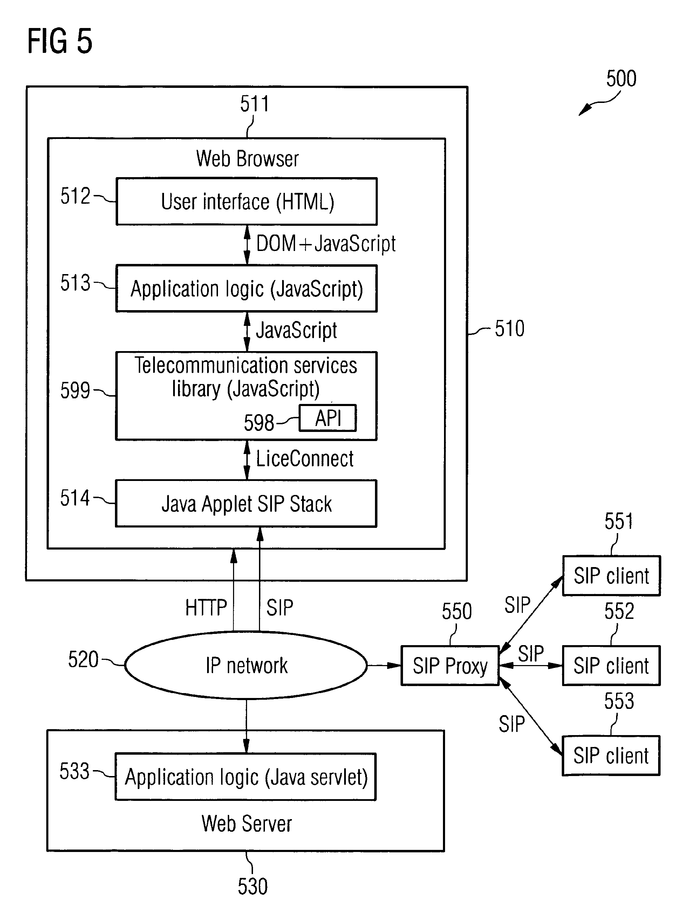

Figure 5 shows an embodiment of a network system illustrating further embodiments of the invention. A network system 500 comprises an IP network 520 that is connected to a client system 510, a web server 530, and a SIP Proxy 550. The SIP proxy 550 is connected to SIP clients 551, 552, 553. The client system 510 comprises a web browser 511. The web browser 511 comprises a user interface 512, an application logic 513, a telecommunication services library 599, and a SIP stack 514. The web server 530 comprises an application logic 533. The SIP stack 514 is implemented as a Java applet and introduces an additional layer within a web page that executes in the web browser 511. An applet is a software component that runs in the context of the web browser. The applet is delivered as part of a web page, and is downloaded automatically by the browser just as any other web page components. Besides Java applet, other examples of applet include ActiveX and Flash objects. The applet is not restricted to communicate with other nodes in the network using HTTP only.

The web server 530 has the role of only serving the web pages to the client browser 511. Unlike the embodiments described by figure 2, the web server 530 does not take part in sending and receiving SIP messages on behalf of the user. Hence, it is included in Figure 5 only for completeness purposes.

The example application for this embodiment is a voice-over-IP user agent, and the following use cases will be presented:
- Initiating a call by sending a SIP INVITE message
- Establishing a call by receiving a SIP 200 OK message

The user interface 512 is constructed from HTML, providing a graphical interface with interface widgets such as text boxes, buttons, scroll bars, and others. The telecommunication services library 599 is written in JavaScript. Its API 598 description is low-level and exposes an API that is adapted from the JAIN SIP API (http://www.jcp.org/en/jsr/detail?id=32).

The client-side application logic 533 code should register some callback functions with the telecommunication service library 599 to handle events such as receiving SIP responses message. For example, the application logic function may contain a function named processResponse and is registered with the telecommunication service library 599 with the following code, whereby registerResponseListener is a function provided by the telecommunication service library: registerResponseListener(processResponse);

When the user of the client system 510 wants to initiate a call to John who is located at one of the other SIP clients 551, the user will do so using the user interface 512 (for example, keying John's SIP URI into a textbox and clicking the "Call" button). The application logic's 513 code intercepts this event, and proceeds to request the telecommunication services library 599 to initiate the call. This is done in a few steps. Firstly, individual objects representing the various headers in a SIP Invite message need to be instantiated. For example, to instantiate a header representing the "To" header of the SIP Invite: var requestURI=AddressFactory.createURI("sip:john@doe.com"); var toAddress=AddressFactory.createAddress(requestURI); var toHeader=HeaderFactory.createToHeader(toAddress, null);
- Then, a Request object is instantiated: var invite = MessageFactory.createRequest(requestURI, Request.INVITE, callIdHeader, cSeqHeader, fromHeader, toHeader, viaHeaders, maxForwards);
- Then, a ClientTransaction object is instantiated and used to send out the SIP Invite message: var inviteTransaction = sipProvider.getNewClientTransaction(invite): inviteTransaction.sendRequest();

The JavaScript telecommunication service library 599 in this embodiment works closely with the underlying Java applet implementation of the JAIN SIP API. For example, the task of sending out an actual SIP Invite message to the IP network 520 is done by the Java applet. The telecommunication services library 599 may communicate with the Java applet using the LiveConnect technology (http://wp.netscape.com/eng/mozilla/3.0/handbook/plugins/) which allows JavaScript to call Java functions, and vice versa.

The SIP INVITE message (addressed to "sip:john@doe.com') is sent to the SIP proxy 550 handling the "doe.com" domain, and is subsequently forwarded to John's SIP user agent 551. John is notified of an incoming call request, and subsequently accepts the call. John's user agent 551 constructs an appropriate SIP 200 OK response message, and sends it back to the SIP proxy 550, which orwards John's SIP 200 OK response back to the Java applet that is running inside the user's browser 511. Using LiveConnect, the Java applet informs the telecommunication service library 599 that a SIP 200 OK response message was received from John. The telecommunication services library 599 then passes on the event to the application logic 513 by calling the previously registered callback function processResponse and passing a ResponseEvent object (which contains details about the SIP 200 OK response) as a parameter.

The processResponse function (which belongs to the client-side application logic 513, and not to the telecommunication service library 599) processes the passed-in parameter object and determines that John has accepted the call. The application logic's 513 code then updates the user interface 512 to inform the user that the call has been established.

An advantage of this embodiment is that the communication stack resides within the browser 511 itself in the form of an applet. Therefore, SIP requests are sent out directly from the web browser 511, while SIP responses are received directly from the web browser 511 too. This eliminates the inherent delay that results in the embodiments according to figure 4, whereby a HTTP request is first sent to the web server before it manifests into a SIP request. Because LiveConnect is a fully two-way communication technology, this embodiment also does not need to resort to polling in order for the telecommunication services library 599 to retrieve incoming events from the applet. The overall effect is that applications with real-time communication can be implemented in the form of this kind of embodiments.

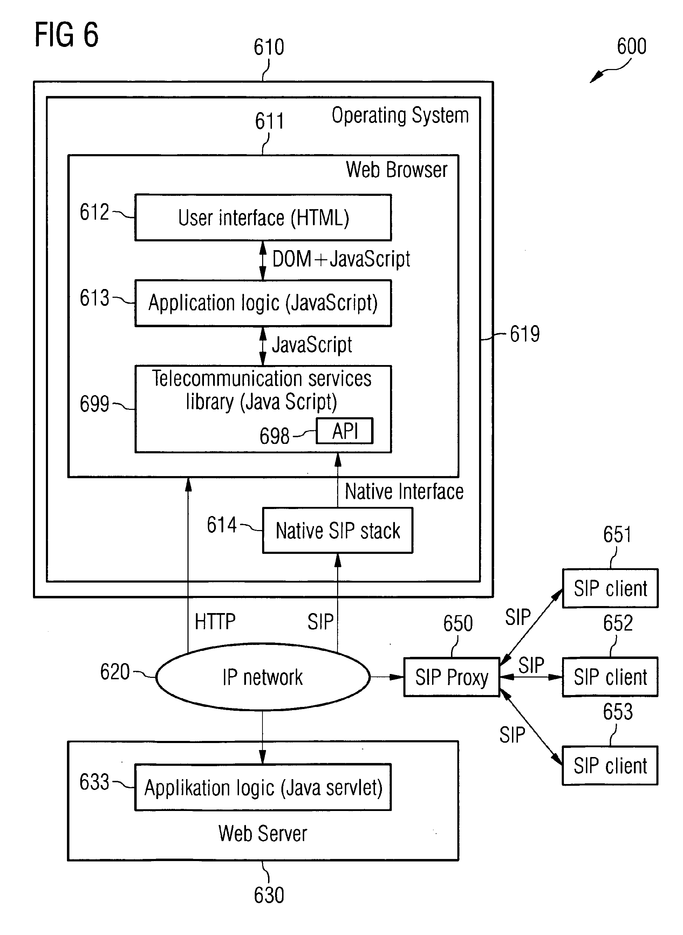

Figure 6 shows an embodiment of a network system illustrating further embodiments of the invention. The embodiments of the invention according to figure 6 are similar to the embodiments of the invention according to figure 5. However, in contrast to figure 5, in figure 6 a native communication stack 614 (for exemplary purposes, a SIP stack) resides in the underlying operating system 619 in which the browser 611 is running upon.

The native communication stack 614 offers a native interface which can be accessed from a web page via a browser client-side scripting language (such as JavaScript). The native communication stack 614 can be a replacement for the applet that was presented in embodiment 2.
This kind of embodiment is especially useful in a scenario where the native communication stack 614 exposes a low-level protocol interface, while the application developer wants to develop in a high-level manner. The telecommunication services library 699 can provide a high-level API library to the application developer. The telecommunication services library 699 itself makes function calls to the low-level native stack 614, but such low-level details are hidden from the application developer.

## Claims

**1.** Method for applying a telecommunication service for an underlying telecommunication network infrastructure (300, 400, 500, 600), comprising the steps of
- transmitting executable code from a server system (430, 530, 630) to a client system (310, 410, 510, 610), whereas the client system (310, 410, 510, 610) comprises a web browser (311, 411, 511, 611);
- calling up the executable code in the client system (310, 410, 510, 610) by the web browser (311, 411, 511, 611),
**characterized in that**
- the executable code calls up a subroutine that is encapsulated within a telecommunication services library (399, 499, 599, 699), whereas the subroutine accomplishes at least a subtask of the telecommunication service.

**2.** Method according to claim 1 or 2,
**characterized in that** the telecommunication services library (399, 499, 599, 699) is defined as any form of browser executable scripting and comprises at least a subset of the following sub-routines:
- a subroutine for voice processing;
- a subroutine for messaging;
- a subroutine for constructing protocol specific messages;
- a subroutine for sending the constructed protocol specific messages;
- a subroutine for receiving the protocol specific messages; and
- a subroutine for parsing the received protocol specific messages.

**3.** Method according to any of the preceding claims,
**characterized in that** the sub-routine accesses a telecommunication protocol stack (434, 514, 614) in order to communicate with the server system (430, 530, 630).

**4.** Method according to claim 3,
**characterized in that** the telecommunication protocol stack (514, 614) is comprised by the client system (510, 610), preferably by the web browser (511) or by an operating system (619) on the basis of which the web browser (611) is executed.

**5.** Method according to any one of the claims 3 or 4,
**characterized in that** before the telecommunication protocol stack (434, 514, 614) is accessed by the subroutine, the telecommunication protocol stack (434, 514, 614) is transmitted from the server system (430, 530, 630) to the client system (310, 510, 610).

**6.** Method according to claim 3,
**characterized in that** the telecommunication protocol stack (434) is comprised by the server system (430).

**7.** Method according to any of the preceding claims,
**characterized in that** the telecommunication services library (399, 499, 599, 699) is comprised by the client system (310, 410, 510, 610), preferably by the web browser (311, 411, 511) or by an operating system (619) on the basis of which the web browser (611) is executed.

**8.** Method according to any of the preceding claims,
**characterized in that** the subroutine exposes an application programming interface (498, 598, 698) which is called up by the executable code.

**9.** Method according to any of the preceding claims,
**characterized in that** the subroutine and/or the whole telecommunication services library (399, 499, 599, 699) is not modifiable by the executable code.

**10.** Method according to any of the preceding claims,
**characterized in that** the subroutine is only modified by other subroutines within the telecommunication services library (399, 499, 599, 699).

**11.** Method according to any of the claims 1 to 8,
**characterized in that** the subroutine is modified by the executable code.

**12.** Method according to any of the preceding claims,
**characterized in that** the executable code is coded in a web-based Markup Language.

**13.** Method according to any of the preceding claims,
**characterized in that** the client system (310, 410, 510, 610) permanently comprises the telecommunication services library (399, 499, 599, 699).

**14.** Method according to any of the preceding claims,
**characterized in that** the library is downloaded with the executable code to the client system (310, 410, 510, 610).

**15.** Client system (310, 410, 510, 610) comprising means adapted to execute the method of any one of the preceding claims.

**16.** Web browser (311, 411, 511, 611) comprising means adapted to execute the method of any one of the claims 1 to 14.

**16.** Server system (430, 530, 630) comprising means adapted to execute the method of any one of the claims 1 to 14.

**17.** System (300, 400, 500, 600) comprising means adapted to execute the method of any one of the claims 1 to 14.
